# EUROPÄISCHE PATENTSCHRIFT

(11) **EP 1 563 257 B1**
(45) Veröffentlichungstag und Bekanntmachung des Hinweises auf die Patenterteilung: **16.09.2009**
(21) Anmeldenummer: 03787313.0
(22) Anmeldetag: 21.07.2003
(51) Int. Cl.: G01C 21/36

(54) **NAVIGATIONSVORRICHTUNG**
NAVIGATION DEVICE
DISPOSITIF DE NAVIGATION

(30) Priorität: 27.09.2002 DE 10245334
(43) Veröffentlichungstag der Anmeldung: 17.08.2005
(73) Patentinhaber: ROBERT BOSCH GMBH, 70442 Stuttgart (DE)
(72) Erfinder: BARKOWSKI, Andre, 38228 Salzgitter (DE); JUNG, Thomas, 33602 Bielefeld (DE); KERSKEN, Ulrich, 31199 Diekholzen (DE); JAEGER, Christian, 31139 Hildesheim (DE)
(86) Internationale Anmeldenummer: PCT/DE2003/002425
(87) Internationale Veröffentlichungsnummer: WO 2004/031692

(56) Entgegenhaltungen:
- EP-A- 1 195 578
- US-A1- 2002 055 808

## Beschreibung

### Stand der Technik

Die Erfindung geht aus von einer Navigationsvorrichtung nach der Gattung des Hauptanspruchs. Es sind schon Navigationsvorrichtungen zur Führung eines Fahrzeugs in einem Verkehrswegenetz bekannt, bei denen Fahrhinweise optisch durch eine Anzeige von Pfeildarstellungen in einer Anzeige vor dem Fahrer dargestellt werden. Diese optische Anzeige wird vorzugsweise durch eine akustische Ausgabe in der Weise unterstützt, dass eine Beschreibung des Fahrhinweises, beispielsweise "jetzt rechts abbiegen", mit ausgegeben wird. Der Fahrer muss die Fahrhinweise selbständig der vor ihm liegenden Verkehrssituation zuordnen. Ferner ist es bekannt, dem Fahrer eine dreidimensionale Ansicht der vor ihm liegenden Straßen anzuzeigen, so dass er eine möglichst realitätsnahe Darstellung der vor ihm liegenden Straßen sieht.

Aus der EP 1 195 578 A2 ist ein Fahrzeugnavigationssystem mit einer Stereoanzeige bekannt, bei dem eine aktuelle Position bestimmt und eine Routenberechnung zu einem Fahrziel durchgeführt wird. Dem Fahrer wird ein dreidimensionales Bild angezeigt, bei dem ein Symbol dazu dient, ihn entlang der Route zu führten. Beispielsweise kann ein Fahrzeugsymbol zur Routenführung verwendet werden.

### Vorteile der Erfindung

Die erfindungsgemäße Navigationsvorrichtung mit den Merkmalen des Hauptanspruchs hat demgegenüber den Vorteil, dass dem Fahrer ein Leitobjekt angezeigt wird, dem er nur noch zu folgen braucht. Das Leitobjekt wird hierzu virtuell, bevorzugt ein Stück vor dem Fahrer, in einer geeigneten Anzeige entlang der von dem Fahrer abzufahrenden Fahrtroute fahrend dargestellt. Die Fahrmanöver, die der Fahrer durchführen muss, werden ihm von dem Leitobjekt vorgeführt, so dass er entsprechende Fahrmanöver im Folgenden lediglich nachholen muss. Eine Umsetzung von symbolischen, optischen Anzeigen oder akustischen Hinweisen in ein aktuelles Fahrmanöver ist damit nicht mehr erforderlich. Insbesondere sprachliche Missverständnisse, zum Beispiel eine Verwechslung der Seiten links und rechts bei einer Fahranweisung, kann bei einer Nachahmung des von dem Leitobjekt vorgeführten Verhaltens nicht mehr erfolgen. Auch wird Fahranfängern die Fahrzeugführung erleichtert.

Durch die in den Unteransprüchen aufgeführten Maßnahmen sind vorteilhafte Weiterbildungen und Verbesserungen der im Hauptanspruch angegebenen Navigationsvorrichtung möglich. Besonders vorteilhaft ist, als Leitobjekt eine Abbildung eines Fahrzeugs zu verwenden, da dieses von einem Fahrer leicht erkannt werden kann und den Fahrer an eine Situation erinnert, bei der der Fahrer einem realen, vorausfahrenden Fahrzeug nach vorheriger Absprache zu einem vereinbarten Fahrziel folgt.

Weiterhin ist vorteilhaft, das Leitobjekt mit einem gegebenen Abstand vor einer aktuellen Position des Fahrzeugs auf die Fahrtroute aufzusetzen und anzuzeigen, da hierdurch einem Fahrer genügend Zeit bleibt, das von dem Leitobjekt ausgeführte Fahrmanöver nachzuvollziehen. Vorzugsweise wird dieser Abstand in Abhängigkeit von der aktuellen Fahrzeuggeschwindigkeit gewählt, wobei der Abstand mit wachsender Fahrgeschwindigkeit vergrößert wird, um dem Fahrer eine hinreichende Reaktionszeit auf das gezeigte Fahrmanöver zu ermöglichen.

Ferner ist vorteilhaft, das Leitobjekt unmittelbar in ein Sichtfeld des Fahrers auf den vor ihm liegenden Verkehrsweg einzublenden. Hierdurch muss der Fahrer den Blick nicht von dem Fahrweg abwenden und wird trotzdem entsprechend der von ihm geplanten Fahrtroute von dem Leitobjekt geführt.

Ferner ist vorteilhaft, insbesondere bei einer Darstellung in einer Anzeige außerhalb des Sichtfeldes, die Umgebung des Verkehrswegs mit anzuzeigen, zum Beispiel den Verkehrsweg umgebende Bauten, um eine Orientierung des Fahrers und eine Zuordnung des Leitobjekts zu den realen Straßenverhältnissen zu erleichtern.

Erfindungsgemäß ist vorteilhaft, Mittel zur Erfassung einer Verkehrssituation vorzusehen, zum Beispiel eine Abstandssensorik zu sich in der Umgebung des Fahrzeugs befindlichen anderen Fahrzeugen, insbesondere seitlich neben dem Fahrzeug und vor dem Fahrzeug. Hierdurch kann bereits eine Darstellung des Leitobjekts bei einem vor dem Fahrzeug liegenden Hindernis oder bei einem vor dem Fahrzeug fahrenden Fahrzeug derart gesteuert werden, dass das Leitobjekt entsprechend verzögert und sich mit angepasster Geschwindigkeit virtuell dem Hindernis nähert. Der Fahrer kann dann mit seiner Steuerung, insbesondere mit der Bremse, bereits auf diese Warnanzeige des Leitobjekts reagieren und seine Geschwindigkeit-ebenfalls entsprechend anpassen. Ferner ist vorteilhaft, Mittel zur Bestimmung der aktuellen Höchstgeschwindigkeit mit einzubeziehen, so dass das Leitobjekt sich nicht schneller entlang der Fahrtroute bewegt, als es die an dieser Stelle geltende zulässige Höchstgeschwindigkeit vorsieht, wobei die aktuelle Position hierfür z.B. über eine Ortungseinheit bestimmt wird. Hierdurch wird der Fahrer, der dem Leitobjekt folgt, von einem Überschreiten einer aktuellen, jeweils geltenden zulässigen Höchstgeschwindigkeit abgehalten.

Bevorzugt sind zur Unterstützung des Fahrers weitere Anzeigefelder vorgesehen, die ihn vor weiteren Gefahren warnen oder über die von einer optischen Einheit erfasste Verkehrszeichen dargestellt werden. Insbesondere sind an dem Leitobjekt Anzeigebereiche vorzusehen, über die Warninformationen an dem Leitobjekt, z.B. ein Schriftzug, oder ein Richtungshinweis dargestellt werden können. Hierbei kann zum Beispiel eine Darstellung einer Richtungsanzeige oder als Warninformation eine Darstellung einer Aktivierung einer Bremsleuchte erfolgen.

Zur Unterstützung der optischen Anzeige ist vorteilhaft eine akustische Ausgabe vorgesehen, um den Fahrer umfassender warnen zu können.

### Zeichnungen

Ausführungsbeispiele der Erfindung sind in der Zeichnung dargestellt und in der nachfolgenden Beschreibung näher erläutert.

Es zeigen
- Figur 1: einen schematischen Aufbau einer erfindungsgemäßen Navigationsvorrichtung,
- Figur 2: eine erste Ausführung einer Anzeige einer erfindungsgemäßen Navigationsvorrichtung,
- Figur 3: eine zweite Ausführungsform einer Anzeige einer erfindungsgemäßen Navigationsvorrichtung,
- Figur 4: einen Ablauf eines Abbiegevorgangs unter Nutzung einer Führung durch die erfindungsgemäße Navigationsvorrichtung,
- Figur 5: eine Ausführung eines Passiervorgangs unter Nutzung einer Führung durch die erfindungsgemäße Navigationsvorrichtung.

### Beschreibung des Ausführungsbeispiels

Die erfindungsgemäße Navigationsvorrichtung kann für das Führen beliebiger Fahrzeuge in einem Verkehrswegenetz verwendet werden. Insbesondere ist die Verwendung zur Führung eines Kraftfahrzeugs in einem Straßennetz vorteilhaft, da hierbei zum Teil komplizierte Fahrmanöver auf kurzen Strecken, insbesondere in einem innerstädtischen Bereich, durchgeführt werden müssen. Im Folgenden wird die erfindungsgemäße Navigationsvorrichtung am Beispiel einer in einem Kraftfahrzeug eingebauten Navigationsvorrichtung erläutert.

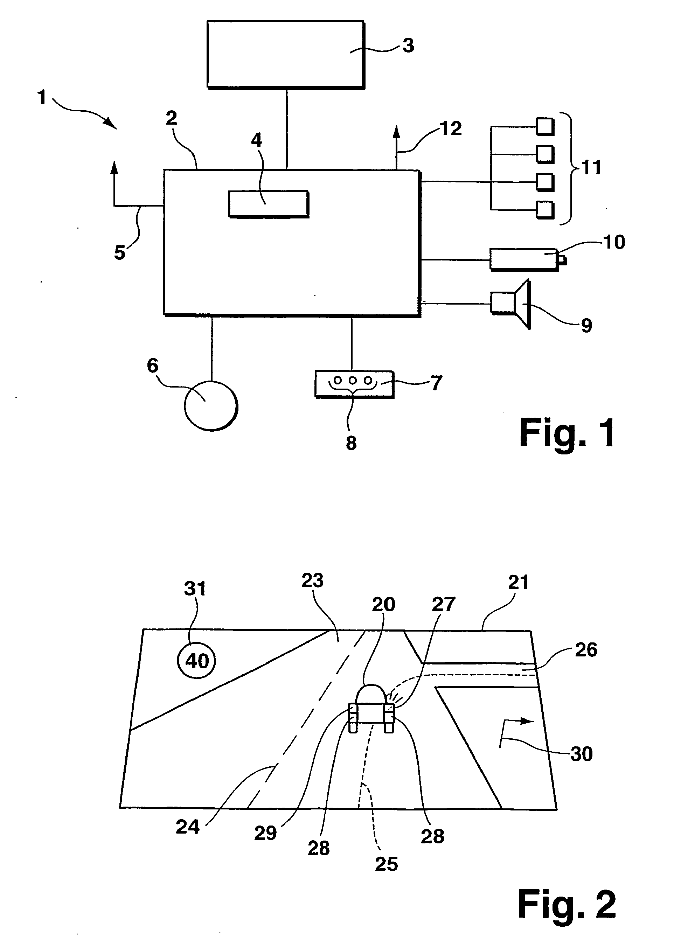

In der Figur 1 ist eine Navigationsvorrichtung 1 mit einer Zentraleinheit 2 dargestellt, an die eine Anzeige 3 angeschlossen ist. Die Zentraleinheit 2 weist eine Recheneinheit 4 auf. Ferner ist an die Zentraleinheit 2 eine Ortungsvorrichtung 5 zur Bestimmung der aktuellen Fahrzeugposition angeschlossen. Die Ortungsvorrichtung 5 ist vorzugsweise als eine Satellitenortungseinheit zur Positionsbestimmung über ein Satellitenortungssystem, z.B. dem GPS (Global Positioning System), ausgeführt. Ferner können auch Drehraten- und Wegstreckensensoren zur Positionsbestimmung an die Zentraleinheit 2 angeschlossen sein. Außerdem sind auch andere, beliebige Fahrzeugortungssysteme zur Positionsbestimmung verwendbar. Die Recheneinheit 4 kann auf ein Datenträgerlaufwerk 6 mit einem Datenträger mit einem darauf abgelegten Straßennetz zugreifen. Die Navigationsvorrichtung ist über eine Bedieneinheit 7 mit Auswahltasten 8 steuerbar. Ferner sind ein Lautsprecher 9 zur akustischen Ausgabe, eine Kameravorrichtung 10 zur Beobachtung des vor dem Fahrzeug liegenden Fahrraums und Abstandssensoren 11 zur Bestimmung des Abstands zu vorausfahrenden oder neben dem Fahrzeug fahrenden Fahrzeugen mit der Zentraleinheit 2 verbunden. Die Abstandssensoren 11 können als Radarsensoren, als Ultraschallsensoren und/oder als Videosensoren ausgeführt sein. Über die Ortungsvorrichtung 5 wird eine aktuelle Position des Fahrzeugs bestimmt. Mittels der Auswahltasten 8 der Bedieneinheit 7 gibt ein Benutzer nun ein Fahrziel in die Navigationsvorrichtung 1 ein, wobei die Recheneinheit 4 eine Fahrtroute von der aktuellen Fahrzeugposition zu dem angegebenen Fahrziel durch Zugriff auf den in das Datenträgerlaufwerk 6 eingelegten Datenträger bestimmt, der zum Beispiel als eine CD-ROM ausgeführt ist. Entsprechende Fahrhinweise werden über die Anzeige 3 sowie über den Lautsprecher 9 an den Fahrer ausgegeben, sobald über die Ortungsvorrichtung 5 eine für die Ausgabe der Fahranweisung vorgesehene Position zur Durchführung der Fahraktion erreicht worden ist. Die Zentraleinheit 2 sowie das Datenträgerlaufwerk 6 und die Bedieneinheit 7 sind in einer bevorzugten Ausführungsform in einer Mittelkonsole des Fahrzeugs angeordnet.

In der Figur 2 ist ein erstes Ausführungsbeispiel für eine erfindungsgemäße Anzeige eines Leitobjekts dargestellt. Die Anzeige 3 ist in diesem Ausführungsbeispiel als ein sogenanntes Head-Up-Display ausgeführt, bei dem als ein Leitobjekt ein Fahrzeugbild 20, vorzugsweise als ein virtuelles Bild, auf eine Windschutzscheibe 21 vor dem Fahrer projiziert wird. Das Fahrzeugbild 20 erscheint dabei für den Fahrer dem tatsächlichen Fahrweg 23, also der vor ihm liegenden Strasse, überlagert. Das Fahrzeugbild 20 wird dabei derart in die Windschutzscheibe 21 eingeblendet, dass es vergleichbar einem tatsächlich vor dem Fahrer fahrenden Fahrzeug erscheint. So wird das Fahrzeugbild 20 vorzugsweise mit einem Abstand in den Fahrweg 23 eingeblendet, der dem sogenannten halben Tachoabstand entspricht, also etwa so weit entfernt ist, wie es der halbe Betrag der aktuellen Fahrzeuggeschwindigkeit in Kilometern pro Stunde beträgt. Das Fahrzeugbild 20, das entsprechend rechts von einer Fahrbahnmarkierung 24 in den Fahrweg eingeblendet wird, wird entlang einer gepunktet eingezeichneten Fahrtroute 25 dargestellt, die zuvor von der Recheneinheit 4 berechnet worden ist. In einer ersten Ausführungsform wird die Fahrtroute selbst nicht dargestellt. In einer anderen Ausführungsform ist jedoch auch eine Einblendung eines Verlaufs der Fahrtroute auf den Fahrweg möglich. Die bevorzugte Darstellung in einer virtuellen Anzeige ermöglicht dabei, das Fahrzeugbild 20 derart darzustellen, dass für einen Betrachter ein räumlicher Eindruck entsteht, so dass das virtuelle Bild tatsächlich den seiner Größe entsprechenden Abstand von dem Fahrzeug entfernt erscheint. Damit verbunden ist eine Anpassung der Größe des Fahrzeugbildes an den berechneten Abstand. Je geringer also der Abstand des Fahrzeugs zu der virtuellen Position des Fahrzeugbildes 20 ist, umso größer erscheint das Fahrzeugbild 20 für den Fahrer. In dem vorliegenden Ausführungsbeispiel sieht die Fahrtroute 20 ein Rechtsabbiegen an der nächsten Abfahrt von der Strasse 23, dem bisherigen Fahrweg, in eine Seitenstrasse 26 vor. Hierzu wird ein rechtes Blinkeranzeigefeld 27 in dem Fahrzeugbild 20 aktiviert, der den Fahrer auf eine vorzunehmende Betätigung der Richtungsanzeige seines Fahrzeugs hinweist, möglichst schon rechtzeitig vor der Kreuzung. Nach dem Abbiegen erlischt das rechte Blinkeranzeigefeld 27 wieder. Ferner können an dem Fahrzeugbild 20 noch Bremslichtfelder 28 sowie ein linkes Blinkeranzeigefeld 29 angeordnet sein. Das linke Blinkerfeld dient zum Anzeigen eines Linksabbiegevorgangs, die Bremslichtfelder 28 weisen auf eine vorzunehmende Verzögerung hin. So können diese zum Beispiel kurz vor dem Abbiegen in die Seitenstrasse 26 aktiviert werden und den Fahrer des Fahrzeuges auf ein erforderliches Verzögern seines Fahrzeugs hinweisen. Ergänzend können weitere Hinweissymbole, zum Beispiel ein Abbiegepfeil 30 oder ein Geschwindigkeitshinweis 31 in die Windschutzscheibe 21 mit eingeblendet werden, um dem Fahrer weitere Informationen für seine Fahrt zu geben. Die weiteren Hinweise 30, 31 werden dabei vorzugsweise am Rand der Windschutzscheibe angeordnet, um das Sichtfeld des Fahrers möglichst nicht zu behindern. Aus diesem Grund ist die Anzeige des Fahrzeugbildes bevorzugt so ausgeführt, dass lediglich eine Einfärbung von Bereichen der Windschutzscheibe erfolgt, so dass hinter dem Fahrzeugbild ablaufende Vorgänge für den Fahrer noch gut sichtbar sind. Dies kann zum Beispiel auch durch eine Reduktion der Darstellung auf eine Umrissdarstellung mit den entsprechenden Warnfeldern erfolgen, so dass das Sichtfeld des Fahrers nicht gestört wird.

Anstelle eines Fahrzeugbilds können auch andere Objekte eingeblendet werden. Dies können insbesondere einfache grafische Objekte sein, zum Beispiel ein Kreis oder gegebenenfalls auch ein punktartig ausgebildetes Objekt, das unabhängig von einem virtuellen Abstand seine Größe beibehält. Hierdurch wird insbesondere der Aufwand für eine Berechnung vermindert, zum Beispiel gegenüber einer Darstellung eines Fahrzeugbildes. Auch diese Objekte können gegebenenfalls Anzeigebereiche zum Beispiel für eine Richtungs- und/oder eine Warnanzeige aufweisen.

Über die Kameravorrichtung 10 und/oder die Abstandssensoren 11 sind Fahrzeuge in der Umgebung des Fahrzeugs ermittelbar. Insbesondere bei sehr dichtem Verkehr unmittelbar vor dem Fahrzeug könnte die Einblendung eines weiteren Fahrzeugs von diesen Fahrzeugen ablenken. In einer weiteren Ausgestaltung der Erfindung wird daher bei einem unterschrittenen Abstand, zum Beispiel 50 Meter, zu einem vor dem Fahrzeug fahrenden Fahrzeug die Einblendung eines Leitobjektes unterdrückt. In diesem Fall erfolgt eine Ausgabe von Fahrhinweisen akustisch über den Lautsprecher 9.

In einer weiteren Ausführungsform kann über die Abstandssensoren 11 und/oder über die Kameravorrichtung 10 der Abstand zu vor dem Fahrzeug fahrenden weiteren Fahrzeugen bestimmt werden, wobei die Geschwindigkeit des Leitobjektes an die Geschwindigkeit dieser anderen, vor dem Fahrzeug fahrenden Fahrzeuge, angepasst wird. Ein Fahrer kann somit die Geschwindigkeit seines Fahrzeugs entsprechend dem vor ihm fahrenden Verkehr regeln.

Ferner können zum Beispiel Verkehrszeichen über die Kameravorrichtung 10 erkannt und gemäß dem symbolhaft dargestellten Geschwindigkeitshinweis 31 in der Windschutzscheibe 21 mit dargestellt werden. Die aktuelle Höchstgeschwindigkeit wird dabei für eine Geschwindigkeitsberechnung der virtuellen Bewegung des Leitobjekts mit berücksichtigt. Über eine Funkschnittstelle 12 können zudem aktuelle Höchstgeschwindigkeiten entweder von einer Dienstezentrale oder von am Straßenrand angeordneten Sendeanlagen der Zentraleinheit 2 übermittelt werden, wobei diese ebenso wie über die Kameravorrichtung 10 erfasste Höchstgeschwindigkeiten bei der Darstellung des Leitobjekts mit berücksichtigt werden.

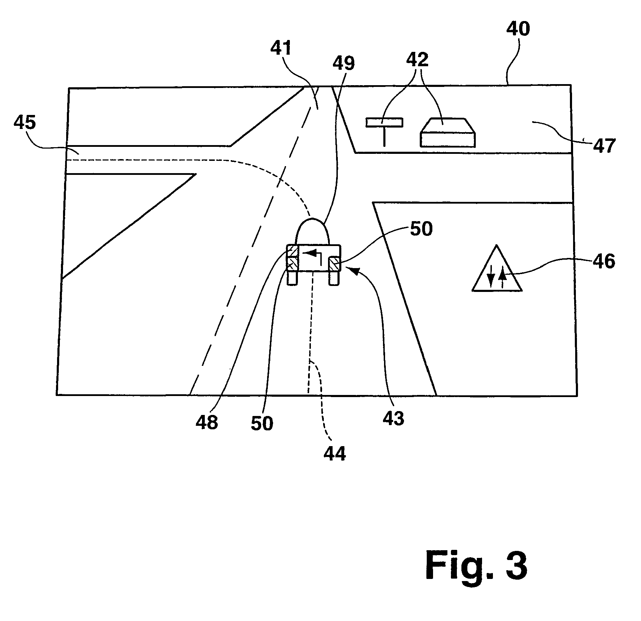

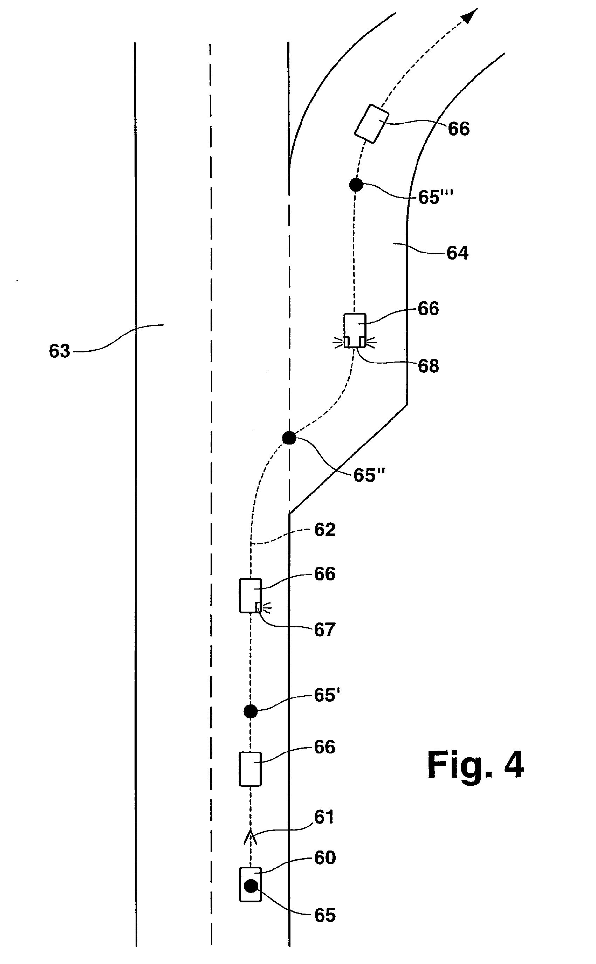

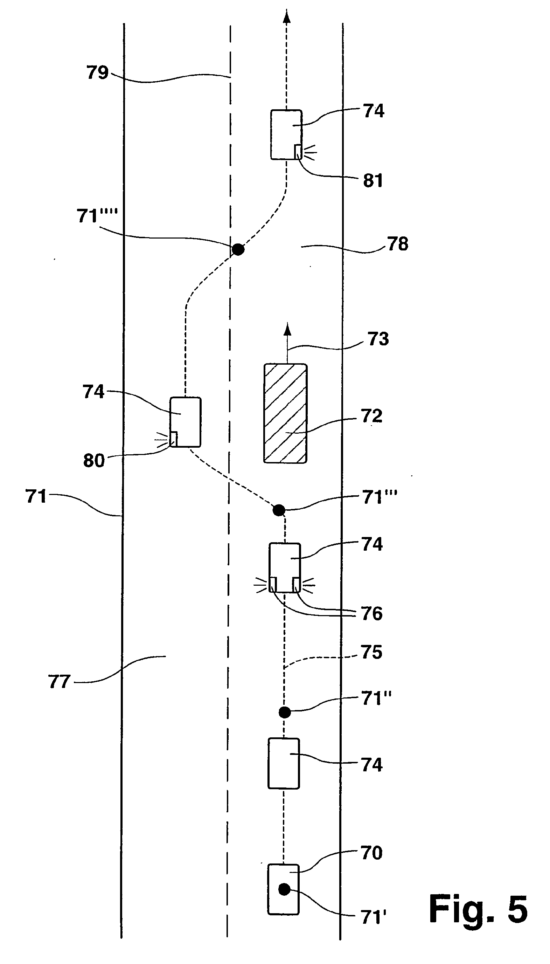

In der Figur 3 ist ein weiteres Ausführungsbeispiel für die Anzeige 3 dargestellt. In einer Anzeigefläche 40, die sich vor dem Fahrer entweder in einem Anzeigeinstrument hinter dem Lenkrad oder in der Mittelkonsole befindet, wird ein Verlauf einer Straße 41 unmittelbar vor dem Fahrzeug dargestellt. In einer bevorzugten Ausführungsform werden hierbei an der Strasse liegende Objekte, zum Beispiel Gebäude 42, hier eine Tankstelle, entweder symbolisch oder fotorealisitisch in die Darstellung mit einbezogen. Zu den Gebäuden 42 oder zu anderen, zusätzlich eingeblendeten Objekten, ist eine Erläuterung mittels eines Hinweistextes 47 möglich. In einer bevorzugten Ausführungsform können auch über die Kameravorrichtung 10 erfasste Objekte mit in die Darstellung in der Anzeigefläche 40 aufgenommen werden. In einer Ausführungsform erfolgt dabei eine perspektivische Anzeige, wobei die Fahrzeugumgebung bevorzugt vereinfacht dargestellt wird, um dem Fahrer zwar die notwendige Orientierung zu geben, ihn jedoch nicht durch eine unübersichtliche Darstellung abzulenken. Ein Fahrzeugbild 43 ist vor dem Fahrzeug entsprechend der Einblendung des Fahrzeugbildes 20 gemäß der Figur 2 auf eine Fahrtroute 44 aufgesetzt und in der Anzeigefläche 40 auf der Straße 41 dargestellt. Im vorliegenden Fall knickt die Fahrtroute 44 in eine nach links abbiegende Seitenstrasse 45 von der gerade befahrenen Straße 41 ab. Durch ein Warnsymbol 46 wird ein Fahrer darauf hingewiesen, dass er gegebenenfalls Gegenverkehr beachten muss. Bei dem hier dargestellten Ausführungsbeispiel sind an dem Fahrzeugbild 43 einerseits ein Blinkerbereich 48 zum Anzeigen eines Abbiegens nach links, ein in das Fahrzeugbild 43 eingeblendeter Richtungspfeil 49 sowie Bremsleuchtenfelder 50 aktiviert, die eine erforderliche Verzögerung vor dem Abbiegen in die Seitenstrasse 45 anzeigen. In einer weiteren Ausführungsform ist es auch möglich, die Umgebung des Fahrzeugs in einer Vogelperspektive in direkter Aufsicht ähnlich einer Kartendarstellung anzuzeigen und das Fahrzeug sowie das vor dem Fahrzeug positionierte Leitobjekt ebenfalls in die Aufsicht auf die Straßenszenerie einzutragen. Der Fahrer kann sich somit ähnlich wie in einer Landkarte orientieren, wobei ihm das Leitobjekt seine von ihm vorzunehmenden Fahrhandlungen vorführt. Eine derartige Darstellung in Aufsicht kann zum Beispiel einer Darstellung von Fahrzeug und Leitobjekt gemäß der im Folgenden zur allgemeinen Erläuterung der Funktionsweise der erfindungsgemäßen Navigationsvorrichtung verwendeten Figuren 4 und 5 entsprechen.

In der Figur 4 ist ein von der erfindungsgemäßen Navigationsvorrichtung durchgeführter Abbiegevorgang dargestellt. Ein Fahrzeug 60, das sich entlang der Pfeilrichtung 61 entlang einer zuvor von der Navigationsvorrichtung berechneten, gepunktet eingezeichneten Fahrtroute 62 auf einer Strasse 63 bewegt, soll in eine Ausfahrt 64 abbiegen. Die aktuelle Fahrzeugposition 65 ist hierbei als ein Punkt dargestellt, der im Weiteren entlang der Fahrtroute 62 zu verschiedenen, nachfolgenden Zeitpunkten eingezeichnet ist. Zu einem ersten Zeitpunkt, bei dem der Punkt mit 65 bezeichnet ist, wird einem Fahrer in einer Anzeige ein Leitobjekt 66 gemäß der Figur 2 oder 3 dargestellt. Das Leitobjekt ist dabei derart in der Anzeige 3 dargestellt, dass es dem Fahrer in einer mittleren Entfernung von z.B. 50 Metern vor dem Fahrer erscheint. Zu einem zweiten Zeitpunkt, bei dem die aktuelle Fahrzeugposition mit 65' bezeichnet ist, wird eine Richtungsanzeige 67 des Leitobjekts 66 aktiviert, das auch hier etwa 50 Meter vor der Fahrzeugposition 65' dargestellt ist. Zu einem dritten Zeitpunkt bei einer aktuellen Fahrzeugposition 65" ist das Fahrzeug bereits auf den Verzögerungsstreifen der Ausfahrt 64 eingebogen. An dem Leitobjekt 66 sind nunmehr die Bremsleuchten 68 aktiviert, die dem Fahrer ein von ihm vorzunehmendes Verzögern seines Fahrzeugs anzeigen. An einer dritten Fahrzeugposition 65'" hat sich derweil der Abstand zwischen der aktuellen Fahrzeugposition 65'" und dem voraus angezeigten Leitobjekt 66 verringert, da sich auch die Geschwindigkeit des Fahrzeugs verringert hat. Das Fahrzeug wird nun durch das Leitobjekt in Pfeilrichtung die Ausfahrt 64 entlanggeführt.

In der Figur 5 ist ein zweites Ausführungsbeispiel für eine Fahrzeugleitung mit der erfindungsgemäßen Navigationsvorrichtung dargestellt. Ein Fahrzeug 70, das sich entlang einer Strasse 71 bewegt, trifft dabei auf ein vor ihm fahrendes, sehr langsames Fahrzeug, zum Beispiel ein landwirtschaftliches Gerät, das sich in Pfeilrichtung 73 mit geringer Fahrzeuggeschwindigkeit entlang der Strasse 71 bewegt. Eine vorberechnete Fahrtroute ist entlang der Strasse 71 geführt. Ein tatsächlicher Fahrweg entlang einer geplanten Fahrtroute 75 ist in die Darstellung auf der Strasse 71 gestrichelt eingetragen. Zu einem ersten Zeitpunkt befindet sich die Fahrzeugposition 71' auf der Strasse 71 und wird von dem vor ihm fahrenden Leitobjekt 74 entlang einer gestrichelt eingezeichneten Fahrtroute 75 geführt. Zu einem späteren Zeitpunkt an einer zweiten Fahrzeugposition 71" haben die Abstandssensoren des Fahrzeugs, insbesondere ein langreichweitiger Radarsensor erkannt, dass sich vor dem Fahrzeug ausgehend von der aktuellen Position 71" das sich langsam bewegende Fahrzeug 72 befindet. Um dem Fahrer eine erforderliche Verzögerung anzuzeigen, werden bei der Darstellung des Leitobjektes 74 diesem zugeordnete Anzeigefelder 76 zur Darstellung eines Bremsvorgangs aktiviert. Gegebenenfalls können auch weitere Warnsymbole angezeigt werden. Die Recheneinheit 4 prüft nun Möglichkeiten, um an dem langsam fahrenden Fahrzeug 72 vorbei zu fahren. Mit einer Annäherung an das langsam fahrende Fahrzeug 72 prüfen seitlich an dem Fahrzeug angeordnete Sensoren, ob ein linker Fahrstreifen 77, der von einem rechten Fahrstreifen 78 durch eine Fahrbahnmarkierung 79 getrennt ist, frei ist. Ferner prüfen langreichweitige Sensoren, ob der Gegenverkehr auf dem linken Fahrstreifen einen Überholvorgang ermöglicht. Letztendlich liegt die Entscheidung bei dem Fahrer selbst, ob er das langsam fahrend Fahrzeug 72 überholen möchte. Setzt er zum Überholen an, wird ihm dadurch, dass das Leitobjekt 74 ebenfalls zu einem Überholen ansetzt und den linken Blinker 80 betätigt, angezeigt, dass seitens der Navigationsvorrichtung keine Einwände gegen den Überholvorgang bestehen. Daher wird zu einem dritten Zeitpunkt 71"' das Leitobjekt auf der linken Fahrspur neben dem Fahrzeug 72 angezeigt. Hat dagegen die Navigationsvorrichtung Bedenken gegen einen Überholvorgang, so wird eine entsprechende Warnung an den Fahrer ausgegeben. Zu einem vierten Zeitpunkt 71"" wird das Leitobjekt 74 nach dem Überholvorgang wieder auf den rechten Fahrstreifen 78 zurückgeführt. Hierbei wird ein rechter Fahrzeugblinker 81 in Betrieb dargestellt. Das Fahrzeug folgt nun weiter der zuvor berechneten Fahrtroute entlang der Strasse 71.

## Patentansprüche

1. Navigationsvorrichtung zur Führung eines Fahrzeugs in einem Verkehrswegenetz, mit einer Recheneinheit (4) zur Berechnung einer Fahrtroute (25, 44, 62, 75) zu einem Fahrziel, mit einer Anzeige (3) zur Darstellung eines Leitobjekts (20, 43, 66, 74), wobei eine Bewegung des Leitobjekts (20, 43, 66, 74) entlang der Fahrtroute gegenüber einem Verkehrsweg (23, 41, 63, 77) derart dargestellt wird, dass das Leitobjekt (20, 43, 66, 74) von dem Fahrzeug vorzunehmende Fahrmanöver ausführt, **gekennzeichnet durch** Mittel (10, 11) zur Bestimmung eines Abstandes zu vor dem Fahrzeug fahrenden Fahrzeugen und **durch** Mittel (4) zur hieran angepassten Steuerung der Bewegung des Leitobjekts (20, 43, 66, 74) derart, dass eine Geschwindigkeit des Leitobjektes an die Geschwindigkeit der vor dem Fahrzeug fahrenden Fahrzeuge angepasst wird.

2. Navigationsvorrichtung nach Anspruch 1, **dadurch gekennzeichnet, dass** das Leitobjekt (20, 43, 66, 74) als eine Fahrzeugabbildung ausgeführt ist.

3. Navigationsvorrichtung nach einem der vorherigen Ansprüche, **dadurch gekennzeichnet, dass** die Anzeige (3) derart ausgeführt ist, dass das Leitobjekt in ein Sichtfeld des Fahrers auf den Verkehrsweg (23, 41, 63, 77) eingeblendet ist.

4. Navigationsvorrichtung nach einem der vorherigen Ansprüche, **gekennzeichnet durch** Mittel (10) zur Darstellung einer Umgebung des Verkehrswegs (23, 41, 63, 77) in der Anzeige.

5. Navigationsvorrichtung nach einem der vorhergehenden Ansprüche, **gekennzeichnet durch** Mittel (5, 10, 12) zur Bestimmung einer erlaubten Höchstgeschwindigkeit zur Bestimmung der Verkehrssituation.

6. Navigationsvorrichtung nach einem der vorherigen Ansprüche, **dadurch gekennzeichnet, dass** das Leitobjekt (20, 43, 66, 74) einen Anzeigebereich (28, 29, 48, 49, 50, 67, 80, 81) zur Darstellung von einem durchzuführenden Fahrmanöver zugeordneten Richtungsanzeigen und/oder Warnanzeigen aufweist.

7. Navigationsvorrichtung nach einem der vorherigen Ansprüche, **gekennzeichnet durch** Mittel (9) zur akustischen Ausgabe von Fahrhinweisen in Bezug auf das Leitobjekt (20, 43, 66, 74).

8. Verfahren zur Führung eines Fahrzeugs in einem Verkehrswegenetz mittels einer Navigationsvorrichtung, wobei eine Recheneinheit (4) eine Fahrtroute (25, 44, 62, 75) zu einem Fahrziel berechnet, wobei ein Leitobjekts (20, 43, 66, 74) in einer Anzeige (3) dargestellt wird, wobei eine Bewegung des Leitobjekts (20, 43, 66, 74) entlang der Fahrtroute gegenüber einem Verkehrsweg (23, 41, 63, 77) derart dargestellt wird, dass das Leitobjekt (20, 43, 66, 74) von dem Fahrzeug vorzunehmende Fahrmanöver ausführt, **dadurch gekennzeichnet, dass** ein Abstandes zu vor dem Fahrzeug fahrenden Fahrzeugen bestimmt wird und dass eine Bewegung des Leitobjekts (20, 43, 66, 74) an den Abstand zu vor dem Fahrzeug fahrenden Fahrzeugen derart angepasst gesteuert wird, dass eine Geschwindigkeit des Leitobjektes an die Geschwindigkeit der vor dem Fahrzeug fahrenden Fahrzeuge angepasst wird.

## Claims

1. Navigation device for guiding a vehicle in a network of traffic routes, having a computing unit (4) for calculating a route (25, 44, 62, 75) to a destination, having a display (3) for presenting a guiding object (20, 43, 66, 74), wherein a movement of the guiding object (20, 43, 66, 74) along the route is displayed with respect to a traffic route (23, 41, 63, 77) in such a way that the guiding object (20, 43, 66, 74) carries out driving manoeuvres which are to be performed by the vehicle, **characterized by** means (10, 11) for determining a distance from vehicles travelling in front of the vehicle, and by means (4) for controlling the movement of the guiding object (20, 43, 66, 74) in a way which is adapted thereto such that a speed of the guiding object is adapted to the speed of the vehicles travelling in front of the vehicle.

2. Navigation device according to Claim 1, **characterized in that** the guiding object (20, 43, 66, 74) is embodied as a representation of a vehicle.

3. Navigation device according to one of the preceding claims, **characterized in that** the display (3) is embodied in such a way that the guiding object is included in a field of vision of the driver onto the traffic route (23, 41, 63, 77).

4. Navigation device according to one of the preceding claims, **characterized by** means (10) for representing surroundings of the traffic route (23, 41, 63, 77) in the display.

5. Navigation device according to one of the preceding claims, **characterized by** means (5, 10, 12) for determining a maximum permitted speed in order to determine the traffic situation.

6. Navigation device according to one of the preceding claims, **characterized in that** the guiding object (20, 43, 66, 74) has a display region (28, 29, 48, 49, 50, 67, 80, 81) for representing direction displays and/or warning displays which are assigned to a driving manoeuvre which is to be carried out.

7. Navigation device according to one of the preceding claims, **characterized by** means (9) for the acoustic outputting of driving instructions relating to the guiding object (20, 43, 66, 74).

8. Method for guiding a vehicle in a network of traffic routes by means of a navigation device, wherein a computing unit (4) calculates a route (25, 44, 62, 75) to a destination, wherein a guiding object (20, 43, 66, 74) is displayed in a display (3), wherein a movement of the guiding object (20, 43, 66, 74) along the route is displayed with respect to a traffic route (23, 41, 63, 77) in such a way that the guiding object (20, 43, 66, 74) carries out driving manoeuvres which are to be performed by the vehicle, **characterized in that** a distance from vehicles travelling in front of the vehicle is determined, and **in that** a movement of the guiding object (20, 43, 66, 74) is controlled in a way which is adapted to the distance from vehicles travelling in front of the vehicle such that a speed of the guiding object is adapted to the speed of the vehicles travelling in front of the vehicle.

## Revendications

1. Dispositif de navigation destiné à guider un véhicule dans un réseau routier, et qui présente
une unité de calcul (4) qui calcule un itinéraire (25, 44, 62, 75) jusqu'à une destination,
un affichage (3) qui représente un objet de guidage (20, 43, 66, 74), le déplacement de l'objet de guidage (20, 43, 66, 74) le long de l'itinéraire étant représenté par rapport à une voie de circulation (23, 41, 63, 77) de telle sorte que l'objet de guidage (20, 43, 66, 74) exécute les manoeuvres de conduite que doit effectuer le véhicule,
**caractérisé par**
des moyens (10, 11) de détermination de la distance par rapport à des véhicules qui roulent en avant du véhicule et
par des moyens (4) de contrôle du déplacement de l'objet de guidage (20, 43, 66, 74) en fonction de cette distance de telle sorte que la vitesse de l'objet de guidage soit adaptée à la vitesse des véhicules qui roulent en avant du véhicule.

2. Dispositif de navigation selon la revendication 1, **caractérisé en ce que** l'objet de guidage (20, 43, 66, 74) est représenté sous la forme d'une image du véhicule.

3. Dispositif de navigation selon l'une des revendications précédentes, **caractérisé en ce que** l'affichage (3) est réalisé en projetant l'objet de guidage dans le champ de vision du conducteur sur la voie de circulation (23, 41, 63, 77).

4. Dispositif de navigation selon l'une des revendications précédentes, **caractérisé par** des moyens (10) de représentation de l'environnement de la voie de circulation (23, 41, 63, 77) dans l'affichage.

5. Dispositif de navigation selon l'une des revendications précédentes, **caractérisé par** des moyens (5, 10, 12) de détermination de la vitesse maximale autorisée pour déterminer la situation du trafic.

6. Dispositif de navigation selon l'une des revendications précédentes, **caractérisé en ce que** l'objet de guidage (20, 43, 66, 74) présente une plage d'affichage (28, 29, 48, 49, 50, 67, 80, 81) qui représente des indications de direction et/ou des indications d'avertissement associées à la manoeuvre de conduite à exécuter.

7. Dispositif de navigation selon l'une des revendications précédentes, **caractérisé par** des moyens (9) d'émission acoustique d'indications de conduite en référence à l'objet de guidage (20, 43, 66, 74).

8. Procédé de guidage d'un véhicule dans un réseau de voies de circulation au moyen d'un dispositif de navigation, dans lequel
une unité de calcul (4) calcule un itinéraire (25, 44, 62, 75) jusqu'à une destination,
un objet de guidage (20, 43, 66, 74) étant représenté dans un affichage (3),
un déplacement de l'objet de guidage (20, 43, 66, 74) le long de l'itinéraire et par rapport à une voie de circulation (23, 41, 63, 77) étant représenté de telle sorte que l'objet de guidage (20, 43, 66, 74) exécute des manoeuvres de conduite que doit exécuter le véhicule,
**caractérisé en ce que**
la distance par rapport aux véhicules qui roulent en avant du véhicule est déterminée et **en ce que** le déplacement de l'objet de guidage (20, 43, 66, 74) est commandé de manière adaptée à la distance aux véhicules qui roulent en avant du véhicule, de manière à adapter la vitesse de l'objet de guidage à la vitesse des véhicules qui roulent en avant du véhicule.
